# EUROPÄISCHE PATENTSCHRIFT

(11) **EP 1 687 545 B1**
(45) Veröffentlichungstag und Bekanntmachung des Hinweises auf die Patenterteilung: **25.03.2009**
(21) Anmeldenummer: 05701070.4
(22) Anmeldetag: 20.01.2005
(51) Int. Cl.: F16B 19/12

(54) **ZERSTÖRUNGSFREIE PRESSVERBINDUNG AN PYROMECHANISCHEN BEFESTIGUNGSELEMENTEN**
DESTRUCTION FREE PRESS CONNECTION ON PYROMECHANICAL SECURING ELEMENTS
ASSEMBLAGE PAR COMPRESSION NON DESTRUCTIVE SUR DES ELEMENTS DE FIXATION PYROMECANIQUES

(30) Priorität: 21.01.2004 DE 102004002993
(43) Veröffentlichungstag der Anmeldung: 09.08.2006
(73) Patentinhaber: Delphi Technologies, Inc., Troy, MI 48007 (US)
(72) Erfinder: DANHAUSER, Franz, 90431 Nürnberg (DE)
(74) Vertreter: Denton, Michael John
(86) Internationale Anmeldenummer: PCT/EP2005/000525
(87) Internationale Veröffentlichungsnummer: WO 2005/071274

(56) Entgegenhaltungen:
- DE-A1- 10 338 394
- DE-A1- 19 754 791
- US-A- 2 842 022
- US-A1- 2003 017 029

## Beschreibung

Die Erfindung betrifft ein pyromechanisches Befestigungselement.

Ein derartiges pyromechanisches Befestigungselement ist aus der DE 10 338 394 A1 bekannt, welche nach dem Prioritätstag dieser Anmeldung veröffentlicht wurde.

Dieses Befestigungselement besteht aus einem metallischen Mantel, in dessen Kopfteil eine pyrotechnische Treibladung angeordnet ist. Diese Treibladung grenzt an einen Adapter an. Am hinteren Teil des Mantels, angrenzend an den Adapter, ist ein Bördelrand zur Befestigung eines ersten Bauteils angeordnet. Zwischen diesem ersten Bauteil und dem Kopfteil ist ein zweites Bauteil auf den Mantel so aufschiebbar, dass das zweite Bauteil am ersten Bauteil anliegt.

An seinem Kopfteil weist der Mantel in Längsrichtung verlaufende Sollbruchkerben auf, die bei Zündung der Treibladung aufreißen, so dass sich die dazwischen liegenden Flächen um den Adapter biegen und dabei das zweite Bauteil entweder direkt oder über eine schwimmende Scheibe an das erste Bauteil pressen, wodurch das erste Bauteil mit dem zweiten Bauteil fest verbunden ist.

Der Erfindung liegt die Aufgabe zu Grunde, ein pyromechanisches Befestigungselement so zu verbessern, dass der Mantel mit dem Adapter ohne extremen Kraftaufwand zu verankern ist.

Erfindungsgemäß wird diese Aufgabe dadurch gelöst,
- dass im Adapter eine zumindest abschnittsweise auf seinem Außenumfang umlaufende Nut angeordnet ist,
- dass vor der Verankerung des Mantels mit dem Adapter auf der Außenfläche des Mantels ein radial abstehender Bund angeordnet ist,
- dass die Nut im Adapter mit dem Bund des Mantels fluchtet und
- dass zur Verankerung des Mantels mit dem Adapter zumindest ein Teil des Bundes in die Nut gepresst ist.

Durch die Anordnung einer Nut im Adapter und dem hierzu fluchtenden Bund auf der Außenfläche des Mantels ist beim Einpressen zumindest eines Teils des Bundes in die Nut kein extremer Kraftaufwand zur Verankerung des Mantels mit dem Adapter erforderlich.

In bevorzugter Ausführungsform sind die Nut im Adapter und der Bund des Mantels auf dem jeweiligen Außenumfang umlaufend ausgebildet.

Die Außenfläche des Mantels weist nach dem Einpressen erfindungsgemäß eine zumindest 3-flächige Form auf. Bevorzugt weist der Mantel nach dem Einpressen eine Vierkantform auf. Eine Vierkantform des Mantels und damit des Befestigungselements ist für den Einbau besonders vorteilhaft.

Zweckmäßigerweise sind die Ecken z. B. der Vierkantform des Mantels abgeschrägt. Diese Abschrägung erfolgt durch das Einpressen des Mantels an diesen Stellen in die Nut.

In erfindungsgemäßer Ausführungsform ist der Mantel aus Metall hergestellt und der Adapter ist bevorzugt zylinderförmig ausgebildet. Der Adapter ist in der Regel aus Metall hergestellt, kann jedoch auch aus einem festen Kunststoff bestehen.

Die Nut im Adapter ist vorteilhaft mittig bezüglich seiner Längserstreckung angeordnet.

Nachfolgend wird die Erfindung an Hand eines Ausführungsbeispiels näher erläutert.

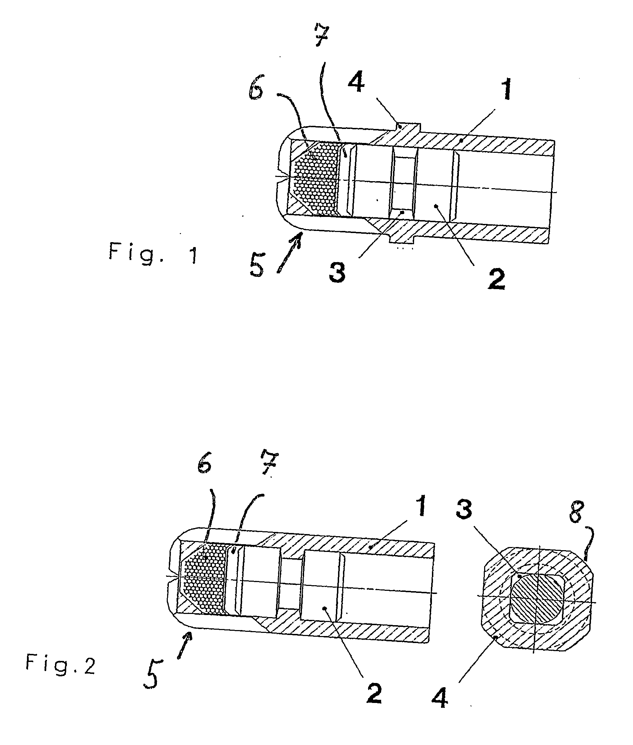

Figur 1 zeigt in einem Längsschnitt den Mantel 1 eines pyromechanischen Befestigungselements in dem ein Adapter 2 eingesetzt ist. Der Adapter 2 ist in dieser Ausführungsform zylinderförmig ausgebildet und besteht bevorzugt aus Metall, wie auch der Mantel 1. Im Kopfteil 5 des Mantels 1 ist eine Treibladung 6 angeordnet, die z. B. durch einen Laserstrahl zündbar ist.

Damit die Treibladung 6 bzw. die entstehenden Gase nach ihrer Zündung den Mantel 1 im Bereich des Kopfteils 5 aufreißen und um den Adapter 2 umbiegen können, sind im Kopfteil 5 in Längsrichtung verlaufende Sollbruchkerben vorgesehen. An der Stirnseite des Kopfteils 5 verlaufen diese Sollbruchstellen radial.

Zwischen der Treibladung 6 und dem Adapter 2 ist ein Hohlraum 7 zum Druckaufbau angeordnet. Wenn von einem an die Treibladung 6 angrenzenden Adapter 2 die Rede ist, so ist auch die Einbringung eines Hohlraums 7 zwischen diesen mitumfaßt.

Auf dem Außenumfang des Adapters 2 eine umlaufende Nut 3 angeordnet. Der Mantel 1 weist fluchtend mit dieser Nut 3 einen auf seinem Außenumfang umlaufenden Bund 4 auf.
Figur 1 zeigt das Befestigungselement vor der Verankerung des Mantels 1 mit dem Adapter 2.
Figur 2 zeigt das Befestigungselement nach der Verankerung in demselben Längsschnitt wie Figur 1. Gut zu erkennen ist, dass der Bund 4 im Zustand vor der Verankerung (Figur 1) im Zustand nach der Verankerung (Figur 2) auf dem Außenumfang des Mantels 1 verschwunden ist. Durch einen Pressvorgang ist das Material des Bundes 4 radial in Richtung Nut 3 gepresst worden und befindet sich jetzt (zumindest zum Teil) in dieser Nut 3, wodurch neben der hochfesten mechanischen Verankerung des Mantels 1 mit dem Adapter 2 eine Vierkantschlüsselform des Befestigungselements mit abgeschrägten Ecken 8 erzeugt ist.

Die beiden Figuren 1 und 2 zeigen nicht das Befestigungsmittel oder einen Anschlag für ein erstes Bauteil.

## Patentansprüche

1. Pyromechanisches Befestigungselement zur mechanischen Verbindung zweier Bauteile, wobei das Befestigungselement aus einem Mantel (1) besteht, in dessen Kopfteil (5) eine pyrotechnische Treibladung (6) angeordnet ist, die an einen Adapter (2) angrenzt und am hinteren Teil des Mantels (1) ein Befestigungsmittel oder ein Anschlag für ein erstes Bauteil angeordnet ist und zwischen dem ersten Bauteil und dem Kopfteil (5) ein zweites Bauteil auf den Mantel (1) aufschiebbar ist, wobei der Mantel (1) an seinem Kopfteil (5) in Längsrichtung verlaufende Sollbruchkerben aufweist, die bei Zündung der Treibladung (6) den Mantel (1) im Kopfbereich aufreißen und um den Adapter (2) umbiegen lassen, wodurch das erste Bauteil mit dem zweiten Bauteil fest verbunden ist, wobei
- im Adapter (2) eine zumindest abschnittsweise auf seinem Außenumfang umlaufende Nut (3) angeordnet ist,
- vor der Verankerung des Mantels (1) mit dem Adapter (2) auf der Außenfläche des Mantels (1) ein radial abstehender Bund (4) angeordnet ist,
- die Nut (3) im Adapter (2) mit dem Bund (4) des Mantels (1) fluchtet und
- zur Verankerung des Mantels (1) mit dem Adapter (2) zumindest ein Teil des Bundes (4) in die Nut (3) gepresst ist.

2. Befestigungselement nach Anspruch 1, **dadurch gekennzeichnet, dass** die Nut (3) im Adapter (2) und der Bund (4) des Mantels (1) auf dem jeweiligen Außenumfang umlaufend ausgebildet sind.

3. Befestigungselement nach Anspruch 1 oder 2, **dadurch gekennzeichnet, dass** die Außenfläche des Mantels (1) nach dem Einpressen eine zumindest 3-flächige Form ausweist.

4. Befestigungselement nach Anspruch 3, **dadurch gekennzeichnet, dass** der Mantel (1) nach dem Einpressen eine Vierkantform mit bevorzugt abgeschrägten Ecken (8) aufweist.

5. Befestigungselement nach einem der Ansprüche 1 bis 4, **dadurch gekennzeichnet, dass** der Mantel (1) aus Metall hergestellt ist.

6. Befestigungselement nach einem der Ansprüche 1 bis 5, **dadurch gekennzeichnet, dass** der Adapter (2) zylinderförmig ausgebildet ist.

## Claims

1. Pyromechanical fastening element for the mechanical connection of two components, wherein the fastening element consists of a shell (1) in the head portion (5) of which is arranged a pyrotechnical propellant charge (6) which adjoins an adapter (2), a fastening means or a stop for a first component is arranged on the rear portion of the shell (1), and between the first component and the head portion (5) a second component can be fitted on the shell (1), wherein the shell (1) on its head portion (5) has predetermined break notches running in the longitudinal direction, which upon ignition of the propellant charge (6) tear open the shell (1) in the head region and allow it to be bent round the adapter (2), as a result of which the first component is rigidly connected to the second component, wherein
- in the adapter (2) is arranged a groove (3) running round its outside periphery at least in one section,
- before anchoring the shell (1) to the adapter (2), on the outer surface of the shell (1) is arranged a radially projecting collar (4),
- the groove (3) in the adapter (2) is aligned with the collar (4) of the shell (1) and
- for anchoring the shell (1) to the adapter (2), at least a portion of the collar (4) is pressed into the groove (3).

2. Fastening element according to claim 1, **characterised in that** the groove (3) in the adapter (2) and the collar (4) of the shell (1) are designed to run round the respective outside periphery.

3. Fastening element according to claim 1 or 2, **characterised in that** the outer surface of the shell (1) has a shape with at least 3 faces after pressing in.

4. Fastening element according to claim 3, **characterised in that,** after pressing in, the shell (1) has a square shape with preferably bevelled corners (8).

5. Fastening element according to any of claims 1 to 4, **characterised in that** the shell (1) is made of metal.

6. Fastening element according to any of claims 1 to 5, **characterised in that** the adapter (2) is cylinder-shaped.

## Revendications

1. Élément de fixation pyromécanique pour la liaison mécanique de deux composants, dans lequel l'élément de fixation est composé d'une enveloppe (1), telle que dans la partie de tête (5) de celle-ci est agencée une charge propulsive pyrotechnique (6) adjacente à un adaptateur (2), et que dans la partie postérieure de l'enveloppe (1) est agencé un moyen de fixation ou une butée pour un premier composant, et un second composant peut être enfilé sur l'enveloppe (1) entre le premier composant et la partie de tête (5), ladite enveloppe (1) comportant au niveau de sa partie de tête (5) des entailles de rupture de consigne s'étendant en direction longitudinale, lesquelles déchirent l'enveloppe (1) dans la région de tête lors de l'allumage de la charge propulsive (6) et la font replier autour de l'adaptateur (2), grâce à quoi le premier composant est fermement relié au second composant, dans lequel
- une rainure périphérique (3) est agencée dans l'adaptateur (2) au moins par tronçon sur sa périphérie extérieure,
- avant l'ancrage de l'enveloppe (1) avec l'adaptateur (2), une collerette (4) en dépassement radial est agencée sur la surface extérieure de l'enveloppe (1),
- la rainure (3) dans l'adaptateur (2) est en alignement avec la collerette (4) de l'enveloppe (1), et
- pour l'ancrage de l'enveloppe (1) avec l'adaptateur (2), au moins une partie de la collerette (4) est pressée dans la rainure (3).

2. Élément de fixation selon la revendication 1, **caractérisé en ce que** la rainure (3) dans l'adaptateur (2) et la collerette (2) de l'enveloppe (1) sont réalisées de manière périphérique sur la périphérie extérieure respective.

3. Élément de fixation selon la revendication 1 ou 2, **caractérisé en ce que** la surface extérieure de l'enveloppe (1) présente après le pressage une forme au moins à trois surfaces.

4. Élément de fixation selon la revendication 3, **caractérisé en ce que** l'enveloppe (1) présente après le pressage une forme carrée avec des coins (8) de préférence biseautés.

5. Élément de fixation selon l'une des revendications 1 à 4, **caractérisé en ce que** l'enveloppe (1) est fabriquée en métal.

6. Élément de fixation selon l'une des revendications 1 à 5, **caractérisé en ce que** l'adaptateur (2) est réalisé de forme cylindrique.
